# EUROPEAN PATENT SPECIFICATION

(11) **EP 3 490 193 B1**
(45) Date of publication and mention of the grant of the patent: **17.06.2020**
(21) Application number: 17830448.1
(22) Date of filing: 17.07.2017
(51) Int. Cl.: H04L 12/24, G06N 5/02, G06N 5/00

(54) **TERMINAL RULE ENGINE DEVICE AND TERMINAL RULE OPERATION METHOD**
VORRICHTUNG FÜR ENDGERÄTEREGEL-ENGINE UND ENDGERÄTEREGELOPERATIONSVERFAHREN
DISPOSITIF DE MOTEUR DE RÈGLES DE TERMINAL ET PROCÉDÉ D'EXPLOITATION DES RÈGLES DE TERMINAL

(30) Priority: 22.07.2016 CN 201610587576
(43) Date of publication of application: 29.05.2019
(73) Proprietor: Alibaba Group Holding Limited, Grand Cayman (KY)
(72) Inventor: XIA, Jupeng, Hangzhou Zhejiang 311121 (CN); GAO, Xueyao, Hangzhou Zhejiang 311121 (CN); MA, Shaoqing, Hangzhou Zhejiang 311121 (CN); TIAN, Bei, Hangzhou Zhejiang 311121 (CN); HUANG, Chongmin, Hangzhou Zhejiang 311121 (CN)
(74) Representative: Conroy, John
(86) International application number: PCT/CN2017/093212
(87) International publication number: WO 2018/014814

(56) References cited:
- EP-A1- 2 120 195
- CN-A- 102 024 234
- CN-A- 105 450 705
- CN-A- 105 630 617
- CN-A- 105 630 797
- US-A1- 2004 024 888
- US-A1- 2014 122 378
- US-A1- 2015 160 938
- US-B1- 7 203 744

## Description

### TECHNICAL FIELD

The present application relates to the field of computer technologies, and in particular, to a terminal rule engine device and a terminal rule operation method.

### BACKGROUND

With the rapid development of computer technologies and Internet technologies, many services can be executed online. Normal execution of the online services depends on predetermined service rules, for example, rules for a payment service, rules for a risk control service, etc.

In the existing technology, rules are operated in a server, and the operated rules are globally applied to all terminals corresponding to the server. A rule operation result of the server is sent to each terminal corresponding to the server, and each terminal determines how to perform subsequent service processing based on the rule operation result.
However, the global application of the rule operation method in the existing technology lead to relatively high risk when performing rule operation or updating operation, causing negative effects on each terminal once a problem occurs.
EP 2 120 195 describes a client side business role engine for executing business rules, at a client, in a rich internet application is disclosed. A set of business rules and a fact base are compliled at a server in accordance with a platform definition model, such that the compiled rules and facts are formatted to conform for use with a business rule engine based on the platform specified in the platform definition model. The business rule engine, embodied in a code module, is served to a requesting web browser application along with a subset of the compiled business rules and facts. At the client, the business rule engine evaluatesconditions expressed in the business rules in light of facts received from the server, and facts derived at the client.
US 7 203 744 describes an integrated policy enforcement system for a computer network implements several policies on the network traffic. A rule compiler compiles these policies and converts them into a rule tree-graph, which is then used to provide desired behavior to the network traffic comprising data packets.
US 2014/122378 describes systems and methods for providing a rules engine as a platform within a portable electronic device. In one embodiment, a rules engine platform is provided within a portable electonic device by receiving a plurality of rules for one or more modules of the portable electronic device.
US 2004/024888 describes a transaction processing system. Content is determined by evaluating one or more rule sets using information previously obtained about the customer and/or the details of the transaction itself. A rules manager module receives a notification from a web server when customer performs a triggering event such as requesting a particular web from the server. The rules manager provides notification of the event to a rules engine module that suitably retrieves an event tree associated with the event. The event tree contains one or more sets of rules that are evaluated by the rules engine using customer and/or transaction data to produce a catalog of customized actions. The actions are then returned to the rules manager module for creating customized content for the customer.

### SUMMARY

The invention is defined in the appended claims. Implementations of the present application provide a terminal rule engine device, to alleviate a problem that the risk is relatively high during rule operation or rule update due to the global application of the rule operation method in the existing technology.

Implementations of the present application further provide a terminal rule operation method, to alleviate a problem that the risk is relatively high during rule operation or rule update due to a global application of a rule operation method in the existing technology.

The following technical solutions are adopted in the implementations of the present application.

The implementations of the present application provide a terminal rule engine device. The device is located on a terminal and includes an interface module, a management module, and an operation module. The interface module receives a rule operation request of a service; the management module manages a rule set of the service obtained from a server based on a device identifier and/or a user identifier corresponding to the terminal; and the operation module, in response to the request received by the interface module, obtains a rule corresponding to the request from the rule set managed by the management module, generates a rule tree based on the obtained rule, obtains service data related to the rule tree, and determines an operation result of the rule based on the rule tree and the service data.

The implementations of the present application further provide a terminal rule operation method, including the following: receiving, by a terminal, a rule operation request of a service; obtaining, by the terminal, a rule corresponding to the request from a rule set of the service, where the rule set is obtained from a server based on a device identifier and/or a user identifier corresponding to the terminal; generating, by the terminal, a rule tree based on the obtained rule, and obtaining service data related to the rule tree; and determining, by the terminal and based on the rule tree, the service data and an operation result of the rule.

At least one of the previous technical solutions used in the implementations of the present application can achieve the following beneficial effects: The rule engine device is deployed in the terminal to manage a device-level or user-level rule set by using the device identifier and/or the user identifier of the terminal. Therefore, a rule in the rule set is operated in the terminal, and rule operation or rule update is separately performed in different terminals, to reduce the risk during rule operation or rule update, thereby partially or totally alleviating the problem in the existing technology.

### BRIEF DESCRIPTION OF DRAWINGS

The accompanying drawings described here are intended to provide a further understanding of the present application, and constitute a part of the present application. The illustrative implementations of the present application and descriptions thereof are intended to describe the present application, and do not constitute limitations on the present application. In the accompanying drawings:
FIG. 1 is a schematic structural diagram illustrating a terminal rule engine device, according to an implementation of the present application;
FIG. 2 is a schematic structural diagram illustrating a rule tree, according to an implementation of the present application;
FIG. 3 is a first detailed schematic structural diagram illustrating the terminal rule engine device in FIG. 1, according to an implementation of the present application;
FIG. 4 is a second detailed schematic structural diagram illustrating the terminal rule engine device in FIG. 1, according to an implementation of the present application;
FIG. 5 is a third detailed schematic structural diagram illustrating the terminal rule engine device in FIG. 1, according to an implementation of the present application; and
FIG. 6 is a schematic flowchart illustrating a terminal rule operation method, according to an implementation of the present application.

### DESCRIPTION OF IMPLEMENTATIONS

To make the objectives, technical solutions, and advantages of the present application clearer, the following clearly and comprehensively describes the technical solutions of the present application with reference to specific implementations and accompanying drawings of the present application. Apparently, the described implementations are merely some rather than all of the implementations of the present application. All other implementations obtained by a person of ordinary skill in the art based on the implementations of the present application without creative efforts shall fall within the protection scope of the present application.

As described in the background, there is a high risk in the rule operation method in the existing technology, and there are more problems than this in the existing technology. Because a rule is operated in a server and a large number of calculation resources of the server needs to be consumed, the server may work under heavy burden; processes of operating rules for a plurality of terminals by the server can affect each other, which increases a risk to service stability; a rule operation result of the server globally affects a service, therefore, when there is a problem with a rule of the server or an operation error occurs during rule operation, an unreliable rule operation result is obtained, correspondingly causing global negative effects on the service.

The solutions of the present application provide a terminal rule engine device disposed on a terminal. A rule can be operated on each terminal instead of the server, thereby partially or totally alleviating the previous problem. The solutions of the present application are described below.

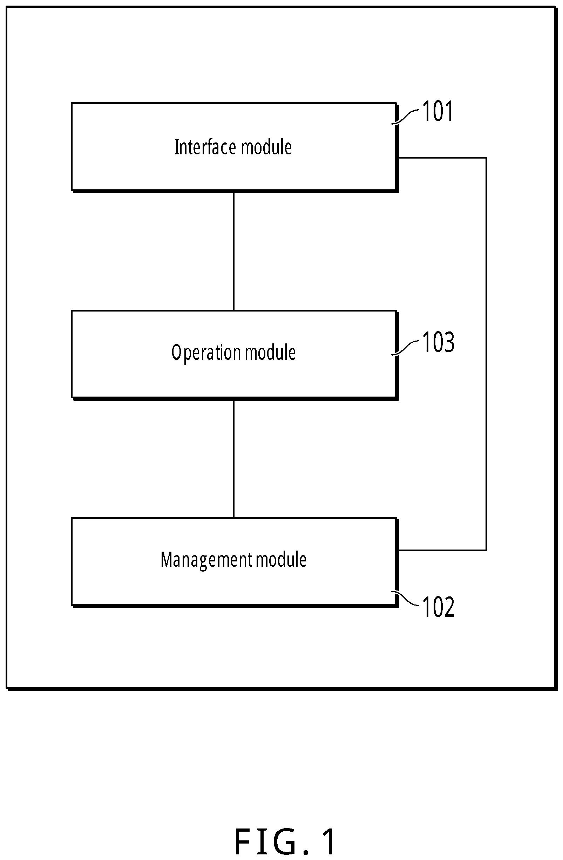

FIG. 1 is a schematic structural diagram illustrating a terminal rule engine device, according to an implementation of the present application. The device is located on a terminal.

In this implementation of the present application, the terminal can be a device such as a mobile phone, a tablet computer, a smart watch, a smart band, an in-vehicle mobile station, or a personal computer.

The terminal has a server corresponding to the terminal, and the server can usually be a server of one or more applications (such as a mobile phone App) installed in the terminal. Each server can correspond to a plurality of terminals. All the terminals can have respective terminal rule engine devices, and can independently operate service rules.

The device in FIG. 1 includes an interface module 101, a management module 102, and an operation module 103.

The interface module 101 receives a rule operation request of a service.

The management module 102 manages a rule set of the service obtained from a server, based on a device identifier and/or a user identifier corresponding to the terminal.

The operation module 103, in response to the request received by the interface module 101, obtains a rule corresponding to the request from the rule set managed by the management module 102, generates a rule tree based on the obtained rule, obtains service data related to the rule tree, and determines an operation result of the rule based on the rule tree and the service data.

In this implementation of the present application, service content is not limited, and can be any service that can be executed online, for example, an e-commerce service, a finance service, a communication service, a risk control service, and a video surveillance service. The services can independently serve a user, or can assist each other in serving the user.

In this implementation of the present application, the terminal rule engine device can belong to a type of service and used for only this type of service, or can be used for more than one type of service.

A related functional module of the service can send the rule operation request by using the interface module 101 to invoke the terminal rule engine device to operate a corresponding rule. In addition to receiving the rule operation request, interaction between the terminal rule engine device and another device can be performed by using the interface module 101, for example, returning a rule operation result, granting an invoking permission, or obtaining related service data.

In this implementation of the present application, the terminal rule engine device can obtain the rule set of the service from the server. An acquisition process can be actively initiated by the terminal rule engine device, for example, the terminal rule engine device requests to obtain the rule set from the server. Alternatively, an acquisition process can be actively initiated by the server, for example, the server sends the rule set to the terminal rule engine device. In practice, to improve rule operation efficiency, the acquisition process of the rule set of the service is usually performed in advance. In this case, when there is a need to operate a rule, the rule set has been stored in the terminal, and a corresponding rule in the rule set can be directly operated without interacting with the server.

Further, the acquisition process can be performed by the management module 102, or can be performed by another module of the terminal rule engine device. Management on the rule set performed by the management module 102 can include updating, maintaining, and managing the rule set, making a decision on a rule that should be operated, etc. In addition to the rule set, the management module 102 can manage other data related to the terminal rule engine device, for example, the service data related to the rule tree.

In this implementation of the present application, terminals not only can independently operate rules, but also can operate rules differently or operate different rules even for a same service. The difference can be implemented based on a difference between device identifiers and/or user identifiers corresponding to different terminals.

For example, the server can provide different rule sets for terminals based on different device identifiers and/or user identifiers provided by the terminals.

For another example, the server can provide a same rule set for terminals, but the management module 102 and the operation module 103 of each terminal can manage and operate the rule set differently based on a device identifier and/or a user identifier corresponding to the terminal. For example, the management module 102 and the operation module 103 only operate a rule in the rule set that matches the device identifier and/or the user identifier corresponding to the terminal.

In this implementation of the present application, the representation form of a rule in the rule set is not limited. The rule can be represented in a code form (such as a script statement or a regular expression), can be represented in a text form (such as a pseudocode), or can be represented in a special data structure form (such as a tree, a linked list, or a graph), etc.

In this implementation of the present application, a rule is operated in a form of a rule tree. The operation module 103 can generate the rule tree based on a rule to be operated in the rule set, to operate the rule by using the rule tree. As described above, the rule in the rule set can be represented in the form of the rule tree. In this case, the operation module 103 does not need to generate the rule tree, but directly obtains the corresponding rule tree from the rule set to operate the rule by using the rule tree.

It is worthwhile to note that the rule is operated in the form of the rule tree due to consideration of the following two points.

First, a structure of the rule tree is hierarchical, orderly, and visible, and is easy to split. These features can help an R&D personnel, an O&M personnel, or a predetermined machine, to logically manage, analyze, and adjust a rule, thereby improving R&D and O&M efficiency and reducing R&D and O&M costs. For example, the rule can be conveniently managed by using the rule tree, and the rule can be adjusted at a fine granularity through node location switching, reorganization, etc., to optimize the rule, and further help improve rule operation efficiency and the specific degree of the rule.

Second, rule operation efficiency is relatively high by using the rule tree because data on each node in the rule tree needs to be read during rule operation, and a hierarchical structure of the rule tree cooperates with a pointer of a non-leaf node to effectively improve a speed of reading the data on each node, so that rule operation efficiency can be relatively high.

In this implementation of the present application, not only the rule tree but also the service data related to the rule tree needs to participate in rule operation, and the service data reflects a service scenario corresponding to a rule that needs to be currently operated. The service data related to the rule tree can be directly obtained by the management module 102 or the operation module 103 from a related functional module of the service. In the former case, the operation module 103 can obtain the service data related to the rule tree from the management module 102 without directly interacting with the related functional module of the service, to help improve security of the operation module 103.

It is worthwhile to note that the method for connecting the modules in FIG. 1 is merely an example, and is not intended to limit the present application. The modules can be connected in another method, provided that the modules can communicate with each other directly or indirectly.

In the previous solution, the rule engine device is deployed in the terminal to manage a device-level rule set and/or a user level rule set by using the device identifier and/or the user identifier of the terminal. Therefore, a rule in the rule set is operated in the terminal, and rule operation or rule update is separately performed in different terminals, to reduce the risk during rule operation or rule update, thereby partially or totally alleviating the problem of the high risk in the existing technology.

In addition, by using the previous solution, other problems in the existing technology can be partially or totally alleviated. Because tasks of operating rules are transferred from the server to terminals, consumption of calculation resources of the server can also be reduced, thereby relieving burden of the server. Because the terminals can independently operate rules and usually does not affect each other, a risk in service stability can be reduced. In addition, a rule operation result of each terminal affects only the terminal. Therefore, even if an unreliable rule operation result is obtained when there is a problem with a terminal rule or an operation error occurs during rule operation, the unreliable rule operation result usually causes negative effects on a service of the terminal but does not affect the other terminals.

Based on the previous solution, this implementation of the present application further provides some specific implementation solutions and extended solutions of the previous solution, which are as described below.

Each module in FIG. 1 can be further subdivided into submodules, and each submodule obtained through subdivision can implement some functions of the module corresponding to the submodule.

In this implementation of the present application, the operation module 103 can include a rule tree calculation submodule configured to generate and calculate a rule tree. That the operation module 103 generates a rule tree based on the obtained rule can include the following: the rule tree calculation submodule determines an expression and/or a logical operator for reflecting the rule based on the obtained rule, and generates the rule tree based on the deterministic expression and/or logical operator.

In this implementation of the present application, the deterministic expression can be used to reflect a determining condition in the rule, and the determined logical operator can be used to perform logic combination on a plurality of determining conditions. The expression includes but is not limited to a logical expression, and a value of the expression is usually TRUE or FALSE. The logical operator includes but is not limited to logical operators AND, OR, NOT, and XOR.

It is worthwhile to note that the expression and the logical operator are example elements of the rule tree. In practice, the rule tree can be formed by using texts or other characters.

Further, the rule tree can be formed in a plurality of methods. Considering calculation efficiency, a leaf node in the rule tree can be the deterministic expression, and a non-leaf node in the rule tree can be the determined logical operator, to achieve relatively high calculation efficiency.

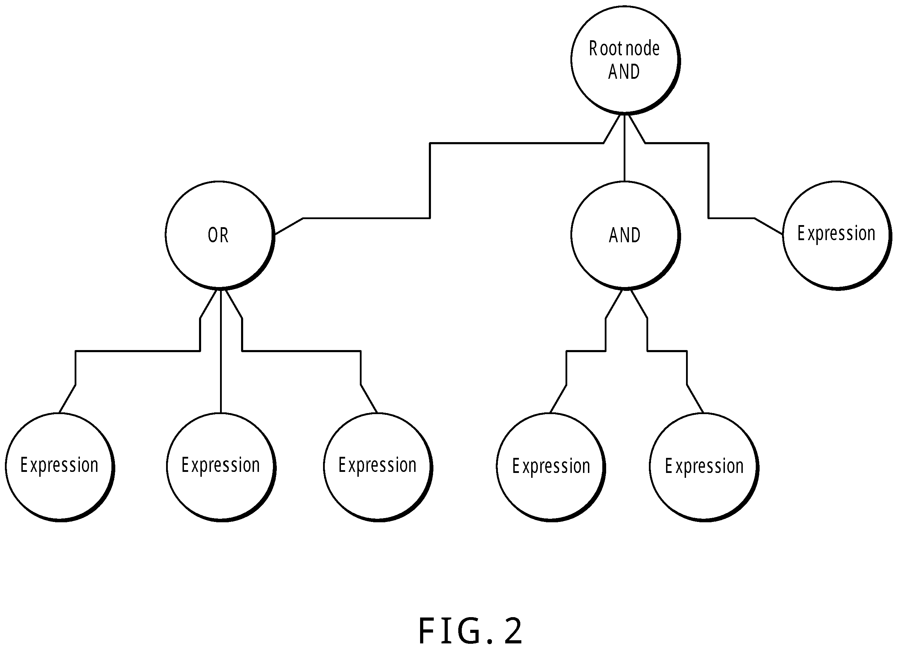

For ease of understanding, an implementation of the present application provides a schematic structural diagram illustrating a rule tree, as shown in FIG. 2.

The rule tree in FIG. 2 is a multi-branch tree, and the multi-branch tree includes three layers. A first layer includes one root node (belonging to a non-leaf node), a second layer includes two non-leaf nodes and one leaf node, and a third layer includes five leaf nodes. The root node is a logical operator "AND" and the two non-leaf nodes at the second layer are respectively a logical operator "OR" and a logical operator "AND".

It is worthwhile to note that the structure of the rule tree in FIG. 2 is merely an example. The number of layers and branches, the specific expression or logical operator of each node in the rule tree, etc are not limited in the present application.

Further, when a rule tree is calculated, the rule tree needs to be calculated based on a specific structure of the rule tree. The rule tree in FIG. 2 is used as an example. That the operation module 103 determines an operation result of the rule based on the rule tree and the service data can include the following: the operation module performs post-order traversal on the rule tree, calculates a value of a root node in the rule tree in the post-order traversal process based on the service data, and determines a calculation result as the operation result of the rule. The operation result is usually TRUE or FALSE. Certainly, in practice, the operation result is possibly not a logical operation result. For example, the operation result can be a value used to represent one of two or more cases.

It is worthwhile to note that use of the post-order traversal here matches the previous rule tree structure (the leaf node is an expression and the non-leaf node is a logical operator), and matching between the two brings the following advantages:

Determining conditions (expressions) corresponding to rules are distributed at branch ends of the rule tree. It is very clear how to perform logic combination on the determining conditions, and the combination is very orderly (logic combination is performed on all subnodes of each parent node, and logic combination on nodes closer to the branch ends has a higher priority). Correspondingly, post-order traversal is performed when the operation result of the rule is determined, and the traversal is performed from the branch end. A value of logic combination close to the branch end is preferably calculated, and the traversal is performed from bottom to up until the value of the root end is calculated. This satisfies an expected priority sequence, and there is no need to add additional logic to interfere with the traversal, thereby helping efficiently determine the operation result.

In this implementation of the present application, in addition to the post-order traversal, the rule tree can be calculated based on in-order traversal or pre-order traversal. However, in the latter case, efficiency of determining the operation result of the rule is lower than that in the post-order traversal. In addition, the structure of the rule tree and the meaning of each node also possibly change. To be specific, the leaf node is unnecessarily an expression, the non-leaf node is unnecessarily a logical operator, and the calculation result of the root node is unnecessarily determined as the operation result of the rule.

In this implementation of the present application, to calculate the rule tree, a value of an expression included in the rule tree needs to be calculated. The operation module 103 can further include an expression calculation submodule configured to calculate a value of an expression. The service data related to the rule tree includes service data needed for calculating the expression. That the operation module 103 calculates a value of a root node in the rule tree can include the following: the expression calculation submodule calculates a value of each expression based on the obtained service data needed for calculating the expression, and the rule tree calculation submodule calculates the value of the root node in the rule tree in the post-order traversal process, based on the value of each expression calculated by the expression calculation submodule and the determined logical operator.

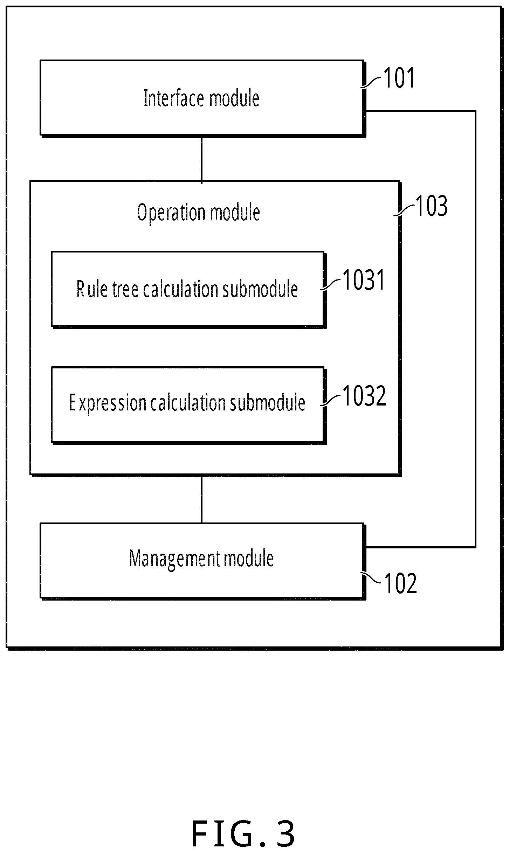

Based on the previous analysis of the submodule of the operation module 103, as shown in FIG. 3, an implementation of the present application provides a first detailed schematic structural diagram illustrating the terminal rule engine device in FIG. 1.

The operation module 103 in FIG. 3 includes a rule tree calculation submodule 1031 and an expression calculation submodule 1032.

In practice, submodules of the operation module 103 are not limited to the two submodules in FIG. 3. Some other submodules that can be included in the operation module 103 are analyzed below.

In this implementation of the present application, after determining the operation result of the rule, the operation module 103 can return the operation result to a requester. Further, to facilitate analysis of the operation result, the operation module 103 can further generate and output operation information related to the operation result. The operation information can be a traversal path used when the rule tree is calculated and each intermediate result.

Therefore, the operation module 103 can further include a result path-tracing submodule configured to complete the operation in the previous paragraph. The result path-tracing submodule records a tracing path of the calculation result to output corresponding operation information. In practice, the information provided by the result path-tracing submodule can help an R&D personnel or an O&M personnel monitor a rule operation status, and predict or locate a rule operation problem, thereby helping improve the terminal rule engine.

In this implementation of the present application, based on the previous analysis, it can be seen that the rule tree calculation submodule 1031 and the expression calculation module 1032 share most calculation tasks during rule operation. In practice, some optimization algorithms can be used to optimize an actual process of executing these calculation tasks, to improve calculation efficiency. To facilitate optimization of a function of a submodule, the operation module 103 can further include a dedicated optimization submodule.

For example, the operation module 103 can further include a tree optimization submodule, and the tree optimization submodule optimizes the rule tree calculation submodule by using an optimization algorithm.

For another example, the operation module 103 can further include an expression optimization submodule, and the expression optimization submodule optimizes the expression calculation submodule by using an optimization algorithm.

In this implementation of the present application, the previous optimization operation can be performed offline or can be performed online. For example, the optimization submodule (the tree optimization submodule or the expression optimization submodule) can be connected to a cloud to directly obtain a latest optimization algorithm from the cloud, thereby optimizing the calculation submodule (the rule tree calculation submodule 1031 or the expression calculation module 1032); or can upload historical data or real-time data for rule operation to a cloud, and the cloud analyzes the data and then provides an appropriate optimization algorithm for the optimization submodule, thereby optimizing the calculation submodule; and so on.

The optimization submodule can make it easier to improve and extend the calculation submodule. In addition, the optimization submodule also reduces direct interaction with the calculation submodule to some extent, thereby helping the calculation submodule focus on completion of the calculation task, and also helping improve security of the calculation submodule.

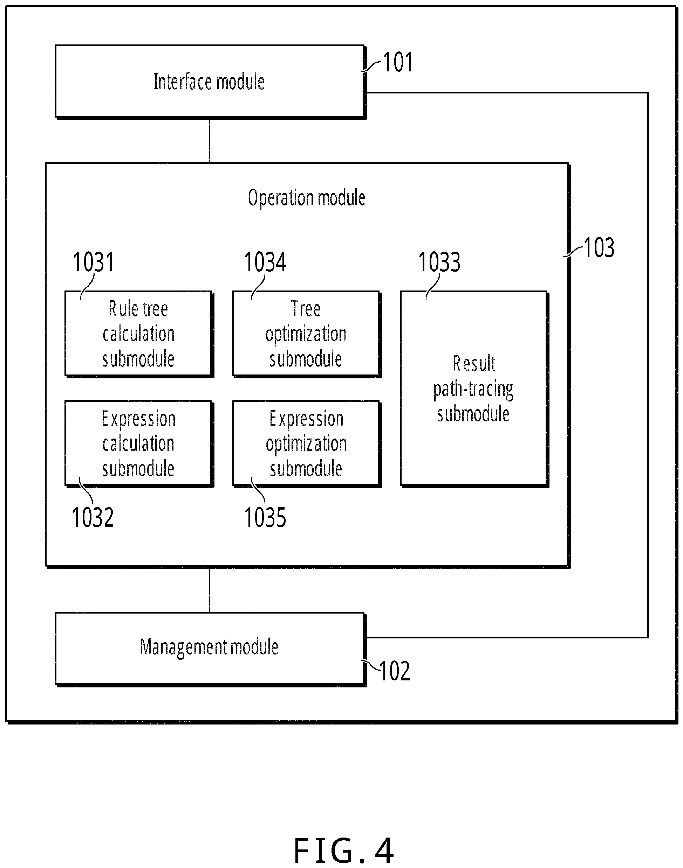

Based on the previous analysis of the submodule of the operation module 103, as shown in FIG. 4, an implementation of the present application further provides a second detailed schematic structural diagram illustrating the terminal rule engine device in FIG. 1 based on FIG. 3.

Compared with FIG. 3, the operation module 103 in FIG. 4 further includes a result path-tracing submodule 1033, a tree optimization submodule 1034, and an expression optimization submodule 1035.

In this implementation of the present application, as mentioned above, the management module 102 can be responsible for updating the rule set in addition to managing the existing rule set. The management module 102 further obtains update data in the rule set from the server based on the device identifier and/or the user identifier corresponding to the terminal. Further, data that can be managed by the management module 102 is not limited to the existing rule set and the update data in the rule set. For example, the management module 102 can further manage the obtained service data related to the rule tree. The service data can be obtained by using corresponding data acquisition interfaces, as such, the management module 102 can manage these data acquisition interfaces together.

In this implementation of the present application, similar to the operation module 103, the management module 102 can also be subdivided into submodules based on different functions of the management module 102. Based on the previous analysis of the functions of the management module 102, a corresponding submodule subdivision method is provided as an example.

The management module 102 can include a data acquisition interface management submodule and a rule set management submodule. The data acquisition interface management submodule manages the service data related to the rule tree, and the rule set management submodule manages the rule set.

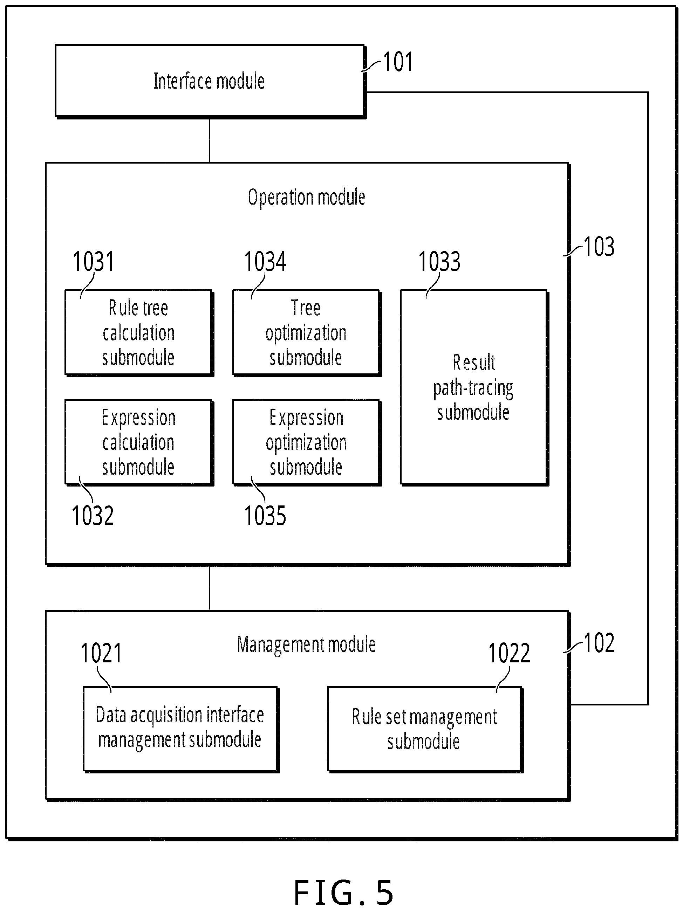

Correspondingly, as shown in FIG. 5, an implementation of the present application further provides a third detailed schematic structural diagram illustrating the terminal rule engine device in FIG. 1 based on FIG. 4.

Compared with FIG. 4, the management module 102 in FIG. 5 includes a data acquisition interface management submodule 1021 and a rule set management submodule 1022.

A structure of the terminal rule engine device is enumerated above, and three detailed structures based on the structure are used as an example. Certainly, the structure and the detailed structure of the terminal rule engine device are not limited to the previous example. The module division method and the submodule division method can also be changed, provided that functions of the terminal rule engine device can be implemented.

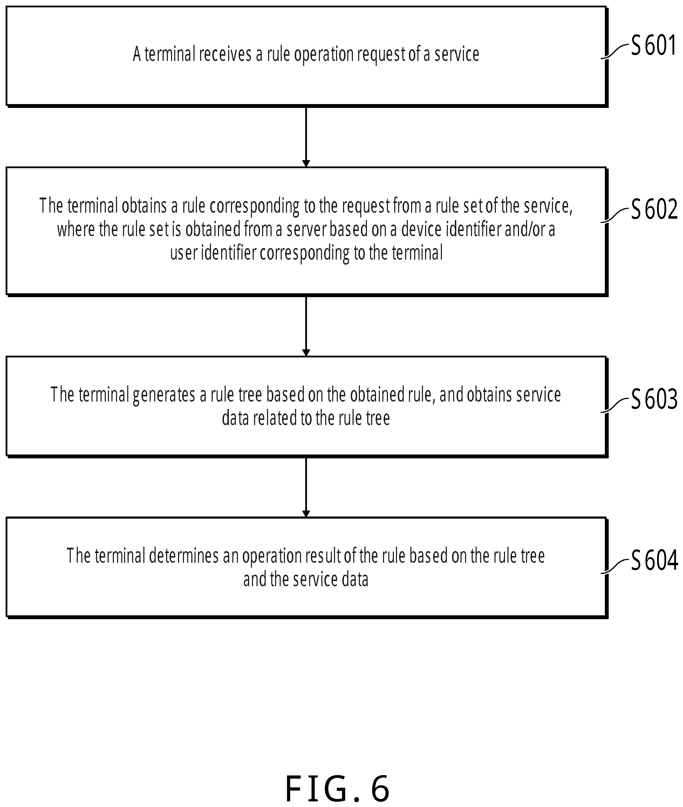

The terminal rule engine device provided in the implementations of the present application is described above in detail. Based on the same idea, as shown in FIG. 6, the implementations of the present application further provide a terminal rule operation method.

FIG. 6 is a schematic flowchart illustrating a terminal rule operation method, according to an implementation of the present application. The method can be performed by a terminal, and can be specifically performed by the previous terminal rule engine device located on the terminal or another device with a similar function.

A procedure shown in FIG. 6 can include the following steps:
S601. A terminal receives a rule operation request of a service.
S602. The terminal obtains a rule corresponding to the request from a rule set of the service, where the rule set is obtained from a server based on a device identifier and/or a user identifier corresponding to the terminal.
S603. The terminal generates a rule tree based on the obtained rule, and obtains service data related to the rule tree.
S604. The terminal determines an operation result of the rule based on the rule tree and the service data.

The method provided in the present application is corresponding to the device provided in the present application, and the method also has beneficial technical effects similar to those of the device. Because the beneficial technical effects of the device have been described above in detail, the beneficial technical effects of the method are omitted here for simplicity.

Based on the method, this implementation of the present application further provides some specific implementation solutions and extended solutions of the method. The solutions are analyzed in detail in the description of the previous device, and therefore only simple description is provided here.

In this implementation of the present application, step S603 in which the terminal generates a rule tree based on the obtained rule can include the following: determining, by the terminal, an expression and/or a logical operator for reflecting the rule based on the obtained rule; and generating, by the terminal, the rule tree based on the deterministic expression and/or logical operator.

In this implementation of the present application, a leaf node in the rule tree can be the deterministic expression, and a non-leaf node in the rule tree can be the determined logical operator.

Further, step S604 in which the terminal determines an operation result of the rule based on the rule tree and the service data can include the following: performing, by the terminal, post-order traversal on the rule tree, calculating a value of a root node in the rule tree in the post-order traversal process based on the service data, and determining a calculation result as the operation result of the rule.

Further, the service data related to the rule tree includes service data needed for calculating the expression. The calculating a value of a root node in the rule tree can include the following: calculating a value of each expression based on the obtained service data needed for calculating the expression; and calculating the value of the root node in the rule tree in the post-order traversal process based on the calculated value of each expression and the determined logical operator.

In this implementation of the present application, after the calculation result is obtained, a tracing path of the calculation result is recorded to output corresponding operation information.

In this implementation of the present application, the following step can further be performed regularly or irregularly: receiving, by the terminal, update data in the rule set from the server based on the device identifier and/or the user identifier corresponding to the terminal.

The terminal rule engine device and the terminal rule operation method provided in the implementations of the present application are described above in detail. In practice, because the rule exerts relatively huge impact on the service, security-related protective measures are adopted in a rule operation process as many as possible, to improve security, stability, and reliability of the service. The protective measures can also be used as a part of the solutions of the present application, and can include software-related or hardware-related protective measures.

For example, in terms of software, code obfuscation protection can be appropriately performed on processing logic for operating a rule. For example, protection can be performed through pack and code virtualization, or by using a code protection technology such as a sandbox.

For another example, in terms of hardware, the terminal rule engine device can be deployed or the terminal rule operation method can be used on hardware with relatively high security (for example, a trusted execution environment (TEE) or a trusted environment (TE)), to provide a more secure environment for a rule operation process.

It is worthwhile to note that the solutions of the present application have been implemented in a scenario of a risk control service, and has obtained a good effect. An operation rule is a risk control rule, and a corresponding risk control object includes a payment procedure, an authentication procedure, etc. Certainly, the solutions of the present application can also be implemented in a scenario of a service other than the risk control service, and similar results can be obtained.

A person skilled in the art should understand that an implementation of the present disclosure can be provided as a method, a system, or a computer program product. Therefore, the present disclosure can use a form of hardware only implementations, software only implementations, or implementations with a combination of software and hardware. Moreover, the present disclosure can use a form of a computer program product that is implemented on one or more computer-usable storage media (including but not limited to a disk memory, a CD-ROM, an optical memory, etc.) that include computer-usable program code.

The present disclosure is described with reference to the flowcharts and/or block diagrams of the method, the device (system), and the computer program product based on the implementations of the present disclosure. It is worthwhile to note that computer program instructions can be used to implement each process and/or each block in the flowcharts and/or the block diagrams and a combination of a process and/or a block in the flowcharts and/or the block diagrams. These computer program instructions can be provided for a general-purpose computer, a dedicated computer, an embedded processor, or a processor of another programmable data processing device to generate a machine, so that the instructions executed by the computer or the processor of the another programmable data processing device generate a device for implementing a specific function in one or more processes in the flowcharts and/or in one or more blocks in the block diagrams.

These computer program instructions can be stored in a computer readable memory that can instruct the computer or the another programmable data processing device to work in a specific way, so that the instructions stored in the computer readable memory generate an artifact that includes an instruction device. The instruction device implements a specific function in one or more processes in the flowcharts and/or in one or more blocks in the block diagrams.

These computer program instructions can be loaded onto the computer or another programmable data processing device, so that a series of operations and steps are performed on the computer or the another programmable device, thereby generating computer-implemented processing. As such, the instructions executed on the computer or the another programmable device provide steps for implementing a specific function in one or more processes in the flowcharts and/or in one or more blocks in the block diagrams.

In a typical configuration, a calculating device includes one or more processors (CPU), an input/output interface, a network interface, and a memory.

The memory can include a non-persistent memory, a random access memory (RAM), a non-volatile memory, and/or another form that are in a computer readable medium, for example, a read-only memory (ROM) or a flash memory (flash RAM). The memory is an example of the computer readable medium.

The computer readable medium includes persistent, non-persistent, movable, and unmovable media that can store information by using any method or technology. The information can be a computer readable instruction, a data structure, a program module, or other data. Examples of a computer storage medium include but are not limited to a phase-change random access memory (PRAM), a static random access memory (SRAM), a dynamic random access memory (DRAM), another type of random access memory (RAM), a read-only memory (ROM), an electrically erasable programmable read-only memory (EEPROM), a flash memory or another memory technology, a compact disc read-only memory (CD-ROM), a digital versatile disc (DVD) or another optical storage, a cassette magnetic tape, a magnetic tape/magnetic disk storage or another magnetic storage device. The computer storage medium can be used to store information accessible by the calculating device. Based on the definition in the present specification, the computer readable medium does not include transitory computer readable media (transitory media) such as a modulated data signal and carrier.

It is worthwhile to further note that, the terms "include", "comprise", or their any other variants are intended to cover a non-exclusive inclusion, so a process, a method, a product or a device that includes a list of elements not only includes those elements but also includes other elements which are not expressly listed, or further includes elements inherent to such process, method, product or device. Without more constraints, an element preceded by "includes a ..." does not preclude the existence of additional identical elements in the process, method, product or device that includes the element.

The previous implementations are implementations of the present application, and are not intended to limit the present application. A person skilled in the art can make various modifications and changes to the present application.

## Claims

1. A method for processing a rule operation, the method comprising:
receiving, by a terminal, a rule operation request of a service (S601);
obtaining, by the terminal, a rule corresponding to the rule operation request from a rule set of the service, wherein the rule set is obtained from a server based on a device identifier and/or a user identifier corresponding to the terminal (S602);
generating, by the terminal, a rule tree based on the rule (S603);
obtaining, by the terminal, service data related to the rule tree (S603); and
determining, by the terminal, an operation result of the rule based on the rule tree and the service data (S604).

2. The method according to claim 1, wherein generating, by the terminal, the rule tree based on the obtained rule comprises the following operations:
determining, by the terminal, a deterministic expression and/or a logical operator for reflecting the rule based on the obtained rule; and
generating, by the terminal, the rule tree based on the deterministic expression and/or logical operator.

3. The method according to claim 2, wherein a leaf node in the rule tree is the deterministic expression, and a non-leaf node in the rule tree is the logical operator.

4. The method according to claim 3, wherein determining, by the terminal, the operation result of the rule based on the rule tree and the service data is based on:
performing, by the terminal, post-order traversal on the rule tree, calculating a value of a root node in the rule tree in the post-order traversal process based on the service data, and
determining a calculation result as the operation result of the rule.

5. The method according to claim 4, wherein the service data related to the rule tree comprises service data needed for calculating the expression; and
calculating the value of a root node in the rule tree comprises the following:
calculating a value of each expression based on the obtained service data needed for calculating the expression; and
calculating the value of the root node in the rule tree in the post-order traversal process based on the calculated value of each expression and the determined logical operator.

6. The method according to claim 4, further comprising:
recording a tracing path of the calculation result to output corresponding operation information.

7. The method according to claim 1, further comprising:
obtaining, by the terminal, update data in the rule set from the server based on the device identifier and/or the user identifier corresponding to the terminal.

8. The method according to any one of claims 1 to 7, wherein the service comprises an online service.

9. The method according to claim 8, wherein the online service comprises an e-commerce service, a finance service, a communication service, a risk control service, or a video surveillance service.

10. The method according to any one of claims 1 to 9, wherein generating the rule tree is based on an optimization algorithm.

11. A device for processing a rule operation, the device comprising a plurality of modules configured to perform the method of any one of claims 1 to 10.

## Patentansprüche

1. Verfahren zur Verarbeitung einer Regeloperation, wobei das Verfahren Folgendes umfasst:
Empfangen einer Regeloperationsanforderung eines Dienstes durch ein Endgerät (S601);
Erhalten, durch das Endgerät, einer Regel, die der Regeloperationsanforderung aus einem Regelsatz des Dienstes entspricht,
wobei der Regelsatz von einem Server auf der Grundlage einer Gerätekennung und/oder einer Benutzerkennung, die dem Endgerät entspricht, erhalten wird (S602);
Erzeugen, durch das Endgerät, eines auf der Regel basierenden Regelbaums (S603);
Erhalten, durch das Endgerät, von Dienstdaten, die sich auf den Regelbaum (S603) beziehen; und
Bestimmen, durch das Endgerät, eines Operationsergebnisses der Regel basierend auf dem Regelbaum und den Dienstdaten (S604).

2. Verfahren nach Anspruch 1, wobei das Erzeugen des Regelbaums durch das Endgerät, basierend auf der erhaltenen Regel, die folgenden Operationen umfasst:
Bestimmen eines deterministischen Ausdrucks und/oder eines logischen Operators zum Darstellen der Regel auf der Grundlage der erhaltenen Regel durch das Endgerät; und
Erzeugen, durch das Endgerät, des Regelbaums auf der Grundlage des deterministischen Ausdrucks und/oder des logischen Operators.

3. Verfahren nach Anspruch 2, wobei ein Blattknoten im Regelbaum der deterministische Ausdruck ist und ein Nicht-Blattknoten im Regelbaum der logische Operator ist.

4. Verfahren nach Anspruch 3, wobei das Bestimmen, durch das Endgerät, des Operationsergebnisses der auf dem Regelbaum und den Dienstdaten basierenden Regel auf Folgendem beruht:
Durchführen, durch das Endgerät, einer Post-Order-Traversierung auf dem Regelbaum, Berechnen eines Wertes eines Wurzelknotens im Regelbaum im Post-Order-Traversierungsprozess auf der Grundlage der Dienstdaten, und Bestimmen eines Berechnungsergebnisses als Operationsergebnis der Regel.

5. Verfahren nach Anspruch 4, wobei die auf den Regelbaum bezogenen Dienstdaten Dienstdaten umfassen, die zur Berechnung des Ausdrucks benötigt werden; und
wobei das Berechnen des Wertes eines Wurzelknotens im Regelbaum Folgendes umfasst:
Berechnen eines Wertes für jeden Ausdruck auf der Grundlage der erhaltenen Dienstdaten, die für die Berechnung des Ausdrucks benötigt werden; und
Berechnen des Wertes des Wurzelknotens im Regelbaum im Post-Order-Traversierungsprozess auf der Grundlage des berechneten Wertes jedes Ausdrucks und des ermittelten logischen Operators.

6. Verfahren nach Anspruch 4, ferner Folgendes umfassend:
Aufzeichnen eines Verfolgungspfades des Berechnungsergebnisses zwecks Ausgabe entsprechender Operationsinformationen.

7. Verfahren nach Anspruch 1, ferner Folgendes umfassend:
Erhalten, durch das Endgerät, von Aktualisierungsdaten im Regelsatz vom Server auf der Grundlage der Gerätekennung und/oder der Benutzerkennung, die dem Endgerät entspricht.

8. Verfahren nach einem der Ansprüche 1 bis 7, wobei der Dienst einen Online-Dienst umfasst.

9. Verfahren nach Anspruch 8, wobei der Online-Dienst einen E-Commerce-Dienst, einen Finanzdienst, einen Kommunikationsdienst, einen Risikokontrolldienst oder einen Videoüberwachungsdienst umfasst.

10. Verfahren nach einem der Ansprüche 1 bis 9, wobei das Erzeugen des Regelbaums auf einem Optimierungsalgorithmus basiert.

11. Vorrichtung zur Verarbeitung einer Regeloperation, wobei die Vorrichtung mehrere Module umfasst, die konfiguriert sind, um das Verfahren nach einem der Ansprüche 1 bis 10 durchzuführen.

## Revendications

1. Procédé de traitement d'une opération de règle, le procédé comprenant :
la réception, par une borne, d'une demande d'opération de règle d'un service (S601) ;
l'obtention, par la borne, d'une règle correspondant à la demande d'opération de règle à partir d'un ensemble de règle du service, dans lequel l'ensemble de règle est obtenu à partir d'un serveur en fonction d'un identifiant de dispositif et/ou d'un identifiant d'utilisateur correspondant à la borne (S602) ;
la génération, par la borne, d'un arbre des règles fondé sur la règle (S603) ;
l'obtention, par la borne, des données de service liées à l'arbre des règles (S603) ; et
la détermination, par la borne, d'un résultat d'opération de la règle en fonction de l'arbre des règles et des données de service (S604).

2. Procédé selon la revendication 1, dans lequel la génération, par la borne, de l'arbre des règles à partir de la règle obtenue comprend les opérations suivantes :
déterminer, par la borne, une expression déterministe et/ou un opérateur logique pour refléter la règle en fonction de la règle obtenue ; et
générer, par la borne, l'arbre des règles fondé sur l'expression déterministe et/ou l'opérateur logique.

3. Procédé selon la revendication 2, dans lequel un nœud feuille dans l'arbre des règles est l'expression déterministe, et un nœud non-feuille dans l'arbre de règle est l'opérateur logique.

4. Procédé selon la revendication 3, dans lequel la détermination, par la borne, du résultat d'opération de la règle en fonction de l'arbre des règles et des données de service est fondée sur :
l'exécution, par la borne, d'une traversée post-commande sur l'arbre des règles, le calcul d'une valeur d'un nœud racine dans l'arbre des règles dans le processus de traversée post-commande en fonction des données de service, et la détermination d'un résultat de calcul comme résultat d'opération de la règle.

5. Procédé selon la revendication 4, dans lequel les données de service liées à l'arbre des règles comprennent des données de service nécessaires pour calculer l'expression ; et
le calcul de la valeur d'un nœud racine dans l'arbre des règles comprend les éléments suivants :
le calcul d'une valeur de chaque expression en fonction des données de service obtenues nécessaires pour calculer l'expression ; et
le calcul la valeur du nœud racine dans l'arbre des règles dans le processus de traversée post-commande en fonction de la valeur calculée de chaque expression et de l'opérateur logique déterminé.

6. Procédé selon la revendication 4, comprenant en outre :
l'enregistrement d'un chemin de suivi du résultat de calcul pour sortir les informations d'opération correspondantes.

7. Procédé selon la revendication 1, comprenant en outre :
l'obtention, par la borne, des données de mise à jour dans l'ensemble de règle à partir du serveur en fonction de l'identifiant d'appareil et/ou de l'identifiant d'utilisateur correspondant à la borne.

8. Procédé selon l'une quelconque des revendications 1 à 7, dans lequel le service comprend un service en ligne.

9. Procédé selon la revendication 8, dans lequel le service en ligne comprend un service de commerce électronique, un service financier, un service de communication, un service d'évaluation des risques ou un service de vidéosurveillance.

10. Procédé selon l'une quelconque des revendications 1 à 9, dans lequel la génération de l'arbre des règles est fondée sur un algorithme d'optimisation.

11. Dispositif de traitement d'une opération de règle, le dispositif comprenant une pluralité de modules configurés pour exécuter le procédé de l'une quelconque des revendications 1 à 10.
